(19) Europäisches Patentamt

European Patent Office

Office européen des brevets

(11) **EP 1 729 379 A1**

(12) **EUROPEAN PATENT APPLICATION**
published in accordance with Art. 158(3) EPC

(43) Date of publication:
06.12.2006 Bulletin 2006/49

(51) Int Cl.:
*H01S 3/06* (2006.01)   *H01S 3/098* (2006.01)

(21) Application number: 05720057.8

(22) Date of filing: 04.03.2005

(86) International application number:
PCT/JP2005/003785

(87) International publication number:
WO 2005/086299 (15.09.2005 Gazette 2005/37)

(84) Designated Contracting States:
DE GB

(30) Priority: 05.03.2004 JP 2004062728

(71) Applicants:
• FURUKAWA ELECTRIC CO., LTD.
Tokyo 100-8322 (JP)
• Takushima, Yuichi
Kanagawa 223-0062 (JP)

(72) Inventors:
• AISO, Keiichi,
c/o The Furukawa Electric Co., Ltd.
Chiyoda-ku
Tokyo 1008322 (JP)

• TADAKUMA, Masateru,
The Furukawa Electric Co., Ltd
Chiyoda-ku
Tokyo 1008322 (JP)
• TAKUSHIMA, Yuichi
Kohoku-ku,
Yokohama-shi
Kanagawa 2230062 (JP)

(74) Representative: **Böck, Bernhard**
**Böck, Tappe, v.d. Steinen, Weigand**
**Patent- und Rechtsanwälte**
**Sollner Strasse 38**
**81479 München (DE)**

(54) **OPTICAL FIBER LASER USING RARE EARTH-ADDED FIBER AND WIDE BAND LIGHT SOURCE**

(57)    A fiber laser includes in a resonator: a normal dispersion optical fiber; an anomalous dispersion optical fiber; a rare earth-doped optical fiber as a gain medium; and a mode locking mechanism, in which at least the rare earth-doped optical fiber is included as the normal dispersion optical fiber, and a length of the rare earth-doped optical fiber is set shorter than that of the anomalous dispersion optical fiber.

# FIG.1

EP 1 729 379 A1

## Description

FIELD OF THE INVENTION

The present invention relates to an optical fiber laser and a broadband light source using a rare earth-doped fiber.

BACKGROUND OF THE INVENTION

Pulsed light sources with broadband spectrum and low coherence are expected for applications in various fields including optical topography and optical fiber sensing. Using light emitting diodes (LED) for generating pulses is considered as a pulse generating method. Low coherent lights can be obtained by using amplified spontaneous emission (ASE) generated from optical fiber amplifiers with erbium (Er) -doped fibers (EDF) and the like as light sources.
However, it is difficult for the LEDs to obtain highly intensive lights and the bandwidth spectrum is also limited to light generation bandwidth of an amplification medium with regard to ASE lights by optical fiber amplifiers.

There is an example of generating light pulses with broadband spectra by a mode-locked fiber laser using the Er-doped fiber (refer to non-patent Reference 1) . This realized broadband oscillation (44nm) of a short coherence length by a stretch pulse fiber laser using a nonlinear polarization rotation as a passively mode-locked mechanism.

Generally, there exist two oscillation modes, a pulse mode and a noiselike mode, in an oscillation phenomenon of the pulse fiber lasers. The pulse mode oscillates a general Fourier transform limit (TL) pulse and the oscillation of a high energy (to several nJ) and an ultrashort pulse (sub 100fs) is reported (refer to non-patent Reference 2). On the other, the noise like mode is composed of a bunch of short pulses in the range of several 10ps. The above mentioned broadband pulse oscillation is an example of the noiselike mode oscillation. The spectrum in the noiselike mode oscillation is broadband and its change is moderate.

Although ripples occur in some spectra in fiber lasers generating a soliton pulse, such a phenomenon does not occur to the noiselike mode oscillation. This noiselike mode oscillation has high pulse light intensity, 10mW in average and 15W at the peak level (Refer to nom-patent Reference 1) and advantageous is that high intensity can be output comparing with LED light sources and ASE light sources.

However, the oscillated bandwidth is limited to the gain bandwidth of Er in non-patent Reference 1 and pulse light sources having broader spectrum are requested.

A method for forming ultra broadband light sources by injecting an ultrashort pulse laser for generating a supercontinuum into a low dispersion fiber is conventionally proposed. In the reference (non-patent Reference 3), a broad band light spanned from 1100nm to 2200nm is obtained, but ripples of about 15 dB remain at a fine frequency in the order of nanometer, so that it is not suitable for the above-mentioned application and it is an object to reduce ripples during generation of the ultra broadband lights.
Nonpatent Reference 1 : H. Horowitz et al., "Noiselike pulse with a broadband spectrum generated from an erbium-doped fiber laser", Opt. Lett., Vol 22, pp.799-801, 1977
Nonpatent Reference 2: L.B.Nelson et.al., "Efficient frequency doubling of a femtosecond fiber laser", Opt. Lett. Vol21, pp.1759-1761, 1996
Nonpatent Documnt 3: BR.Washburn et al., "A phase locked frequency comb from anall-fibre supercontinuum source," Proc. of European Conference on Optical Communication 2003 (ECOC2003), Post-deadline paper Th 4.1.2., Rimini, Italy, Sept. 21-25, 2003.

DISCLOSURE OF THE INVENTION

PROBLEM TO BE SOLVED BY THE INVENTION

Accordingly, the present invention is made to meet the requirement to broaden light source spectrum and an object of the present invention is to provide a light source having output characteristics of broader spectrum.

MEANS FOR SOLVING THE PROBLEM

In the present invention, dispersion map of a resonator suitable for generating a noiselike and broadband pulse is designed and a noiselike laser having the maximum bandwidth in the 1.5 $\mu$m band is made to achieve the above-mentioned object. The configuration of such fiber laser and broadband spectrum light source is specifically described hereinafter.

A first embodiment of the present invention is a fiber laser comprising in a resonator: a normal dispersion optical fiber; an anomalous dispersion optical fiber; a rare earth-doped optical fiber as a gain medium; and a mode locking mechanism, wherein at least said rare earth-doped optical fiber is included as said normal dispersion optical fiber, and a length of said rare earth-doped optical fiber is set shorter than that of said anomalous dispersion optical fiber.

A second embodiment of the present invention is a fiber laser comprising in a resonator: a normal dispersion optical fiber; an anomalous dispersion optical fiber; a rare earth-doped optical fiber as a gain medium; and a mode locking mechanism, wherein at least said rare earth-doped optical fiber is included as said normal dispersion optical fiber, an absolute value of the normal dispersion per unit length at central wavelength of the output light spectrum in said rare earth-doped fiber is larger than that of the anomalous dispersion per unit length of said anomalous dispersion optical fiber.

A third embodiment of the present invention is a fiber laser comprising in a resonator: a normal dispersion optical fiber, an anomalous dispersion optical fiber, a rare earth-doped optical fiber as a gain medium; and a mode locking mechanism, wherein at least said rare earth-doped optical fiber is included as said normal dispersion optical fiber, a nonlinear coefficient $(\gamma 2 L2)/(\gamma 1 L1)$ is larger than 1 where, in said rare earth-doped fiber, a nonlinear coefficient is $\gamma 1 [1/W/m]$, a length is $L1[m]$, an effective nonlinear coefficient of other components of the resonator including the anomalous dispersion fiber is $\gamma 2$ $[1/W/m]$, a length is $L2[m]$.

A fourth embodiment of the present invention is a fiber laser, wherein a total dispersion of the central wavelength of the output light spectrum in said resonator is a value within a range of $-1ps^2$ to $+0.2ps^2$.

A fifth embodiment of the present invention is a fiber laser, wherein a core portion of said rare earth-doped optical fiber is added at least with an erbium(Er) ion.

A sixth embodiment of the present invention is a fiber laser, wherein a peak value of absorption coefficient in 1.53 $\mu$m band of said Er-doped optical fiber is set within a range of 10dB/m to 35dB/m.

A seventh embodiment of the present invention is a fiber laser, wherein a dispersion value in 1.55$\mu$m band of said rare earth-doped optical fiber in said resonator is not less than $21ps^2/Km$.

An eighth embodiment of the present invention is a fiber laser, wherein a ratio of an absorption peak value to a dispersion value $\alpha/D[dB/ps^2]$ is not less than 500, where a dispersion value in 1.55 $\mu$m band of said rare earth-doped optical fiber is $D[ps^2/m]$ and an absorption peak value in 1.53 $\mu$m band is $\alpha[dB/m]$.

A ninth embodiment of the present invention is a fiber laser, wherein said resonator comprises a pump light source for injecting a pump light into said resonator and an optical multiplexer for multiplexing the pump light from said pump light source, and said resonator further comprises a rare earth-doped optical fiber, a single mode optical fiber, a polarization beam splitter, an optical isolator, and a polarization plate.

According to the first embodiment of the broadband light source related to the present invention, at least highly nonlinear fiber is connected with an output side of the fiber laser to generate a supercontinuum(SC) light.

According to the first embodiment of a broadband light pulse generating device related to the present invention, the broadband light pulse generating device comprising: a pulse light source generating a noiselike pulse in which an envelop curve of an intensive waveform is in a timewise pulse state; and a nonlinear medium exciting a nonlinear effect to said noiselike pulse, wherein said noiselike pulse generates the supercontinuum light in said nonlinear medium to generate a broadband pulse light.

According to the second embodiment of the broadband light pulse generating device, said pulse light source has a laser resonating structure comprising in the resonator a normal dispersion medium, an anomalous dispersion medium, a gain medium, and a mode-locked mechanism.

According to the third embodiment of the broadband light generating device related to the present invention, said normal dispersion medium is made of an optical fiber having a normal dispersion, said anomalous dispersion medium is made of an optical fiber having anomalous dispersion, and said gain medium is made of a rare earth-doped optical fiber.

According to the fourth embodiment of the broadband light generating device related to the present invention, said pulse light source comprises a noise light source generating noise light in which an intensive envelop curve is timewise constant, and a modulator modulating said noise light.

According to the fifth embodiment of the broadband light generating device related to the present invention, said nonlinear medium is made of a DSF (dispersion shifted fiber), a dispersion flat fiber, and a photonic crystal fiber or a HNL (highly nonlinear fiber).

According to a first embodiment of a noiselike pulse generating device related to the present invention, the noiselike pulse generating device generates a noiselike pulse in which an envelop curve of an intensive waveform is timewise pulse state by a duration-limited burst noise light, wherein the noiselike pulse generating device comprises a noise light source generating a noise light in which the intensive envelop curve is timewise constant and a modulator modulating said noise light, said modulator modulating said noise light to generate said noiselike pulse.

EFFECT OF THE INVENTION

It is possible to provide a fiber laser having a spectrum which is much more flat and much broader than the gain spectrum of the Er-doped fiber. Further, it is possible to provide broadband light sources using this fiber laser.

BRIEF DESCRIPTION OF THE DRAWINGS

FIG. 1 is a block diagram showing the fiber laser related to a first embodiment.
FIG. 2 is a graph showing an output light spectrum of the fiber laser related to the first embodiment.
FIG. 3 is a graph showing an autocorrelation trace by a decentered autocorrelator of the output light of the fiber laser related to the first embodiment.
FIG. 4 is a block diagram showing a fiber laser related to the second embodiment.
FIG. 5 (1) is a graph showing an output spectrum of a fiber laser related to the second embodiment. FIG. 5(2) is a graph showing an output spectrum of a fiber laser related to the fourth embodiment.

FIG. 6 is a block diagram showing a fiber laser related to the third embodiment.

FIG. 7 is a graph showing an autocorrelation trace by a decentered autocorrelator of the output light of the fiber laser related to the third embodiment.

FIG. 8 is a block diagram showing a fiber laser related to the fourth embodiment.

FIG. 9 is a block diagram showing a fiber laser related to the fifth embodiment.

FIG. 10 is a graph showing an operating condition of the laser fiber.

FIG. 11 is a graph showing changes of a pulse width and a spectrum width of the fiber laser.

FIG. 12 is a graph showing a time waveform of the output light of the fiber laser related to the first embodiment.

FIG. 13 is an explanatory diagram showing an essential portion of the laser related to the present invention.

FIG. 14 is a diagram showing an example of a polarization beam splitter used as a light polarizer.

FIG. 15 is a diagram showing an example of a dispersion shifted fiber connected at a dispersion value of around 0 with collimator lens of SMF.

FIG. 16 is diagrams showing a spectrum during oscillation in noiselike mode, FIG. 16 (a) shows the spectrum at a pump power of 500mW and FIG. 16 (b) shows one at a pump power of 1000mW.

FIG. 17 is a diagram showing an example of configuration of linear resonator.

FIG. 18 is a diagram showing an example of using a Ytterbium-doped optical fiber as rare earth doped optical fiber (Configuration 1).

FIG. 19 is a diagram showing an example of using a Ytterbium-doped optical fiber as rare earth doped optical fiber (Configuration 2).

FIG. 20 is a diagram showing a simulation of generating supercontinuum using a noiselike pulse.

FIG. 21 is a diagram showing a simulation of generating supercontinuum using an ultrashort pulse.

FIG. 22 is a principal diagram showing noiselike pulse generation without using fiber lasers.

FIG. 23 is a diagram sowing an experimental example of noiselike pulse generation without using fiber lasers.

FIG. 24 is a diagram showing an output spectrum when an input power is changed into highly nonlinear fiber.

FIG. 25 is a diagram showing an example of other noiselike pulses.

## EXPLANATION OF REFERENCE NUMERALS

| 11 | Er-doped Fiber (EDF) |
| 21, 22, 23 | Dispersion Shifted Fiber (DSF) |

| 31, 32m 33 | Single Mode Fiber (SMF) |
| 41 | Corning Flexcore 1060 |
| 51 | Highly Nonlinear Fiber (HNL) |
| 61, 65 | Quarter Polarization Plate |
| 62 | Half Polarization Plate |
| 63 | Polarization beam splitter (PBS) |
| 64 | Isolator (ISO) |
| 66 | Optical multiplexer (WDM Coupler) |
| 71 | Pump light Source |
| 81 | Output Port |

DESCRIPTION OF THE PREFERRED EMBODIMENTS

Preferred embodiments of the fiber laser and the broadband light source using the same related to the present invention will be explained hereinafter with reference to the drawings.

The same reference numerals are used to the same portions or similar portions in the description of the drawings. In the present invention, a total dispersion value of the central wavelength of the output light spectrum in the resonator is adjusted to be a value within the range of $-1ps^2$ to $+0.2ps^2$. The reason is described below.

First, an upper limit of accumulated dispersion amount at the anomalous dispersion side is obtained aided by a theory of stretch pulse laser (dispersion-managed solitons). When an intensity of a dispersion map expressed by the below formula exceeds 10, a pulse solution is difficult to be obtained.

$$S = (\beta_{21}L_1 - \beta_{22}L_2)/T^2_{FWHM}$$

Where $\beta_{21}$, $L_1$ is a dispersion, a length of the normal dispersion fiber and $\beta_{22}$, $L_2$ is a dispersion, a length of the anomalous dispersion fiber. $T_{FWHM}$ is a full width at half maximum of pulse.

Should a pulse width be estimated at 200fs to be short and S=10, a total dispersion amount at anomalous dispersion side would be about $-0.2ps^2$. Since the pulse mode case is in the applicable scope of a dispersion managed soliton theory, the safe pulse solution is prerequisite for existence. In the case of noiselike pulse, however, it is not necessary to have a strict pulse solution, and a tolerance of the total dispersion amount at the anomalous dispersion side is about 5 to 10 times, about $-2ps^2$. Therefore, $-1ps^2$ is obtained based on 50% as an upper limit.

When a total dispersion amount becomes a normal dispersion, spread of the pulse duration is enhanced by the frequency shift due to nonlinear optical effect. So there is little tolerance at the normal side and it is hard to obtain a noiselike mode solution in the condition that normal dispersion exceeding 20% of dispersion amount at the anomalous dispersion side remains while the dispersion management is being operated. Therefore with regard to the fiber laser in the feasible noiselike mode, a total dispersion in the center wavelength of the output light spectrum in the resonator is adjusted within the range of -1ps$^2$ to +0.2ps$^2$.

Further in the present invention, a nonlinear ratio of $(\gamma 2L2)/(\gamma 1L1)$ is larger than 1, where at 1.55$\mu$m wavelength in rare-earth doped optical fibers a nonlinear coefficient is $\gamma 1$[1/W/m], a length is L1[m], an effective nonlinear coefficient is $\gamma 2$[1/W/m] and a length is L2[m] at a 1.55$\mu$m wavelength of other resonator components including anomalous dispersion fiber

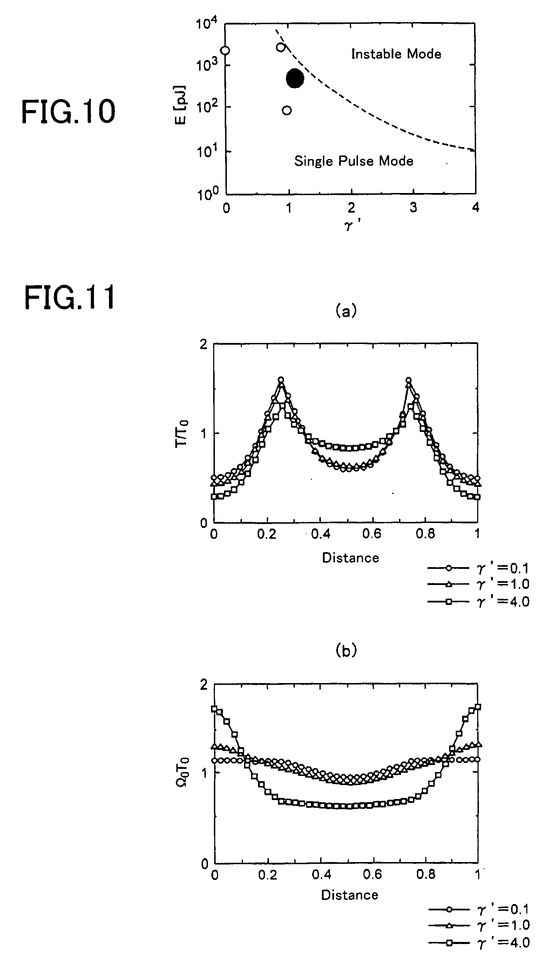

In FIG. 10, a fiber laser operation condition is shown as a relation between a pulse energy E [pJ] and a nonlinear ratio $\gamma$. Unstable mode is in the region above the dotted line and pulse oscillation is not obtainable. In order to obtain a broadband light pulse in the region below the dotted line (single pulse mode) where pulse oscillation is obtainable, a nonlinear ratio of $(\gamma 2L2)/(\gamma 1L1)$ should be larger than 1. This is because the non linear ratio ($\gamma$ in the horizontal axis of FIG. 10) is so far set not more than 1 in the fiber laser and an effect of spectrum spread becomes remarkable when the ratio exceeds 1. In FIG. 10, white circles show operation conditions of the conventional fiber lasers.

In order to generate light pulses greatly exceeding the EDF gain band, an effective nonlinear ratio r'= $(\gamma 2L2)/(\gamma 1L1)$ should be higher than 1. $\gamma 1$[1/W/m] and L1 [m] express a nonlinear coefficient and length at 1.55$\mu$m wavelength in the normal dispersion fiber (EDF), and $\gamma 2$ [1/W/m] and L2[m] express effective nonlinear coefficient and length at 1.55$\mu$m wavelength of the normal dispersion fiber and other components of the resonator.

Examples of numerical simulations are shown in FIG. 11. A horizontal axis represents a normalization distance of the resonator in a longitudinal direction and a zone between 0 to 0.25 and a portion between 0.75 to 1.0 express a zone of the anomalous dispersion fiber and a portion between 0.25 to 0.75 expresses a zone of the normal dispersion fiber (EDF). Because of a ring resonator configuration, this change is periodically repeated and 0 and 1.0 express the same point. FIG. 11 (a) shows a change of pulse width and FIG. 11(b) shows that of spectrum width. When a nonlinear ratio $\gamma$ greatly exceeds 1, spectrum expansion occurs in the vicinity of midpoint of the anomalous dispersion fiber and narrow spectra are kept in the normal dispersion fibers.

Therefore, the spectrum during amplification becomes narrow and a light pulse exceeding the bandwidth limit of gain medium is obtained. A nonlinear ratio is about 4 in the embodiment 1 mentioned below. In the embodiment 1, since nonlinear coefficients are not so different between normal dispersion fibers EDF and the other anomalous dispersion fibers, a length of the anomalous dispersion fiber should be sufficiently longer than that of the normal dispersion fiber to obtain broadband spectrum.

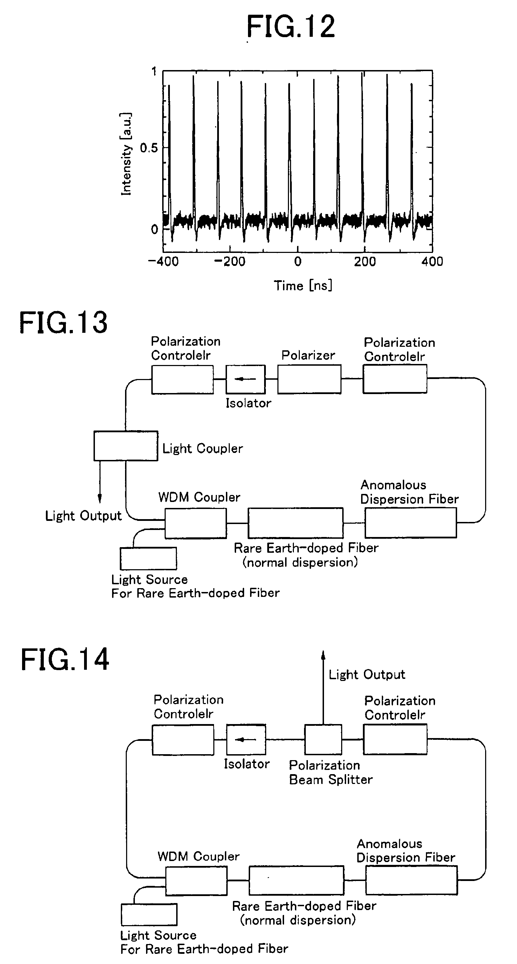

FIG. 13 shows an explanatory diagram showing an essential part of the laser related to the present invention. An essential part of the laser related to the present invention will be explained with reference to FIG. 13. A location of a light coupler for extracting light output is arbitrary in FIG. 13. Although a wavelength plate is used in a polarization controller in the embodiments described below, a fiber loop and other preferred replacements may be used instead of the wavelength plate. A light polarizer may be of any configuration, and if the polarization beam splitter is used for the light polarizer, the light polarizer may be integrated with the light coupler for obtaining light output as shown in FIG. 14. (First Embodiment)

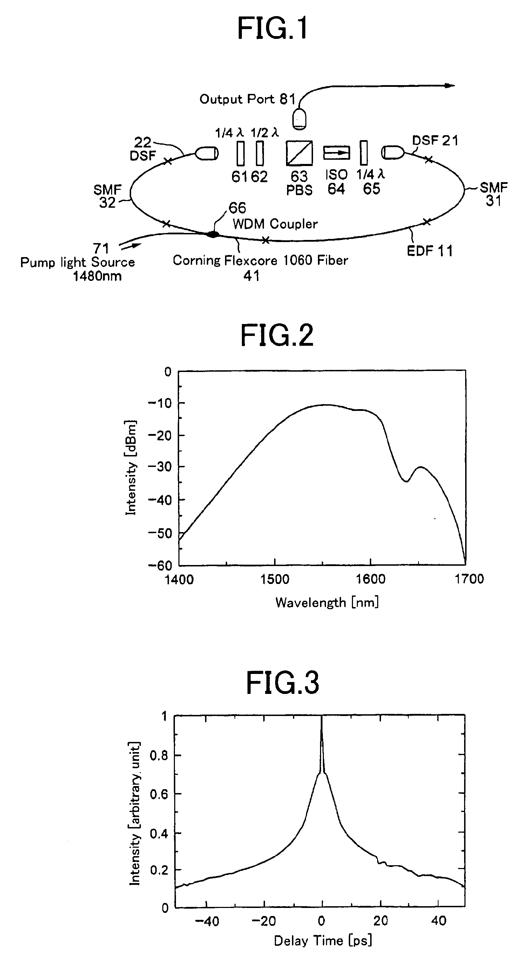

First, the first embodiment related to the present invention will be explained. FIG. 1 is a block diagram showing a fiber laser of the first embodiment. In the fiber laser of this configuration as in FIG. 1, sequentially arranged in a pulse traveling direction are a dispersion shifted fiber (DSF) 21, a single mode fiber (SMF) 31,an Er-doped optical fiber (EDF) 11, Corning Flexcore 1060 (Trademark) fiber 41, an optical multiplexer (WDM) coupler 66, a single mode fiber(SMF) 32, a dispersion shifted fiber (DSF) 22, a 1/4$\gamma$ polarization light plate 61, a 1/2$\gamma$ polarization light plate 62, a polarization beam splitter (PBS) 63, an isolator (ISO)64, and a 1/4$\gamma$ polarization light plate 65, and the resonator is formed in a ring type passing through these and returning again to the dispersion shifted fiber (DSF) 21.

A pump light from a pump light source 71 is combined with the corning Flexcore 1060 fiber 41 through the WDM coupler 66 and the Er-doped fiber (EDF) 11 is pumped bya backward pumping configuration. In the first embodiment a pump light source of 1480nm band is used as the pump light source 71. An output light is extracted through an output port 81 and entered into a optical spectrum analyzer or an autocorrelater and the waveform is observed. Inventors of the present invention designed a dispersion map suitable to realize oscillation of noiselike and broadband pulses based on dispersion of each fiber and an absorption value of the Er-doped fiber (EDF) in the resonator of the first embodiment.

Specifically, used is an Er-doped optical fiber (EDF) having a high normal dispersion in which 38.4ps$^2$/km is a dispersion value with the Er-doped fiber (EDF) 11 having a 1.55 $\mu$m wavelength, and a total dispersion is designed to be -0.029ps$^2$ at a wavelength of 1.55 $\mu$m in the resonator of the first embodiment. Here, respective lengths of optical fibers in the resonator of the first embodiment are DSF 21: 1.8m, SMF 31: 2.4m, EDF 11: 2.5m, Corning Flexcore 1060 fiber 41: 3.0m, SMF 32: 2.5m, DSF 22: 1.8m and total fiber length is 14.0m.

As mentioned above, in the resonator of the first embodiment, EDF having high normal dispersion is used, thereby making the length of EDF 11 having normal dispersion much shorter than that of anomalous dispersion fiber. Thus an influence of the nonlinear effect increases in the anomalous dispersion region to promote spread of the spectrum. Therefore, a fiber laser having above-mentioned configuration in the embodiment makes it easier to generate noiselike mode and possible to generate broader band.

To verify this, the output spectrum in the fiber laser of the first embodiment was observed. As in FIG. 2, a flat and broad spectrum of 87nm with 3dB bandwidth was obtained around the wavelength of 1.55$\mu$m as a center. The above mentioned output spectrum greatly exceeds the gain bandwidth of the Er-doped fiber. With the present invention, it is found that it successfully realized broader bandwidth than that of the fiber laser (bandwidth 44nm, Refer to non-patent Reference 1) using the conventional Er-doped fiber. Here, intensity of the output light is 72mW, pump power (wavelength of 1.48$\mu$m) of the pump light source 71 is 0.5W.

When the pump light power is not less than 420mW, the polarizing plates, 61, 62, 65 are rotated to easily achieve the mode-locked operation. Basic repetition frequency is 14.3MHz. FIG. 3 is an autocorrelation waveform by decentered autocorrelator of the output light. A component having a width of about 100 femtoseconds in the vicinity of center is observed, which shows that a pulse component having a pulse width of at least several hundred femtoseconds exists. And a pedestal having a width of about 10 picoseconds located below expresses the envelop curve of noiselike pulse, which is found to generally constitute a pulse light as a whole. As clearly shown by FIG. 3, a pulse component having a pulse width of at least several hundred femtsecond exists.

FIG. 12 is a graph showing time waveform of the output light in the fiber laser of the embodiment 1. That means FIG. 12 shows time change of light intensity observed with a photo detector having 100MHz band. FIG. 12 shows that pulses are generated at intervals of 70 nanosecond and are under mode-locked operation.

In the case that accumulated normal dispersion in the resonator is compensated with the anomalous dispersion fiber, length of the normal dispersion fiber is required to shorter than that of the anomalous dispersion fiber as shown in the first embodiment. For that purpose, a dispersion absolute value of the normal dispersion fiber EDF should be larger than the anomalous dispersion of the anomalous dispersion fiber.

In the above mentioned first embodiment, a standard SMF (dispersion value-21ps$^2$/km at wavelength 1.55 $\mu$m) is used as an anomalous dispersion fiber. In this case, a dispersion value of the normal dispersion fiber EDF is required larger than the dispersion absolute value of the anomalous dispersion fiber SMF, 21ps$^2$/km in order to make the normal dispersion fiber length shorter than the anomalous dispersion fiber length. Therefore, in the first embodiment of the present invention, the dispersion value of EDF with 1.55$\mu$m is preferred to be not less than 21ps$^2$/km from a viewpoint of broadband noiselike mode oscillation.

Preferred dispersion absolute value in each dispersion region in the resonator can be observed with a formula of 0.5 x (spectrum expansion coefficient) ÷ (spectrum width)$^2$. Here, the spectrum expansion coefficient is a ratio of a spectrum maximum value in the anomalous dispersion region to a spectrum minimum value in the normal dispersion region. For noiselike pulses having about 60nm effective spectrum width as in this embodiment, preferred dispersion value is within a range from 0.05ps$^2$ to 0.10ps$^2$. In this embodiment, a dispersion value is 38.4ps$^2$/km at 1.55$\mu$m wavelength of EDF 11, a used length is 2.5m, and a total dispersion in the normal dispersion region is 0.096ps$^2$.

In the actual design of the resonator, length is determined so as to meet the preferred dispersion value based on the dispersion value of each dispersion region fiber. With regard to the noiselike mode oscillation as in this embodiment, it is effective to make the dispersion value of the normal dispersion fiber EDF as large as possible to make the normal dispersion fiber length shorter comparing with the anomalous dispersion fiber length. However, shortening EDF decreases the output obtained in EDF, so that it is required to increase the absorption coefficient (absorption value per unit) according to the shortening to keep the absorption length product (product of absorption coefficient and length) constant.

In the first embodiment, the used length of EDF and the absorption peak value at 1.53 $\mu$m wavelength are 2.5m and 23.7dB/m respectively, and therefore the absorption length product is 59.25dB. The absorption length product in this embodiment is desired to be a value larger than 50dB, preferably larger than 55dB from the viewpoint of sufficient laser output. It is clear from the above description, there exists a preferred balance between dispersion value and absorption coefficient in EDF. The values should be set in such manner that the dispersion value at the 1.55$\mu$m wavelength in EDF is D [ps$^2$/m] and the absorption peak value at the 1.53$\mu$m band is $\alpha$ [dB/m] . When the total dispersion in the normal dispersion region is 0.10ps$^2$ and the absorption length product is not less than 50dB, the required length L[m] of EDF is determined to be L=0.10/D, and the ratio of the absorption value and dispersion value, $\alpha$/D, is larger than 500[dB/ps$^2$] as a preferable condition.

Thus, it is effective for the oscillation of broadband and noiselike mode to increase $\alpha$ and D while keeping preferred ratio of absorption vale to dispersion value $\alpha$/D. However, Er ions excessively doped to expand $\alpha$ cause reduction of conversion efficiency (concentration quenching) due to interionic interaction, thereby sufficient output can not be obtained. Therefore, the ceiling value exists to prevent Er concentration (absorption coefficient) from exceeding the specific value, in order to keep the sufficient conversion efficiency. The inventors of the present invention prepared EDFs with different absorption coefficients and determined and compared the efficiency of power conversion from the pump light to the signal light in the 1.48 $\mu$m bi-directional pumping configuration. They observed remarkable decline of power conversion efficiency when the absorption value exceeds 35dB/m.

For this reason, an absorption peak value is desired to be not more than 35dB/m to keep good conversion efficiency. Further to prevent the conversion efficiency decline due to the concentration quenching, it is desirable that aluminum (Al) is co-doped at high concentration. In the EDF 11 of this embodiment Er is co-doped with Al at the concentration of not less than 4.8wt%. From viewpoint of concentration quenching prevention, Al is desired to be co-doped at the concentration of not less than 3wt%, preferably not less than 4wt%.

Further, to make the normal dispersion fiber length shorter than the anomalous dispersion fiber length as mentioned above, the dispersion value of the normal dispersion fiber EDF is required to be larger than the dispersion absolute value $21ps^2$/Km of the anomalous dispersion fiber SMF. Therefore, with $0.10ps^2$ of the total dispersion in the normal dispersion region and not less than 50dB of the absorption length product, the required absorption peak value becomes not less than 10.5dB/m. Thus in this embodiment, it is found necessary that the absorption peak value is at least not less than 10dB/m.

(Second Embodiment)

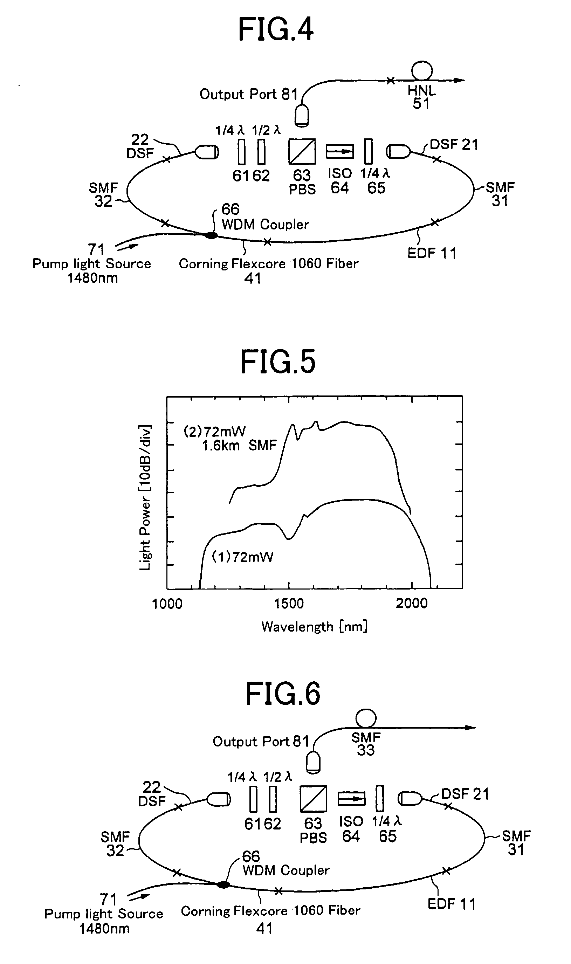

A second embodiment related to the present invention will be explained. FIG. 4 is a block diagram showing a fiber laser of the second embodiment. The configuration of resonator of this fiber laser and length of each fiber are same with those of the resonator of the above mentioned first embodiment, and the supercontinuum generation experiment is conducted by making the noiselike pulse extracted through the output port 81 enter the highly nonlinear fiber(HNL) 51. A dispersion value at 1.55 $\mu$m wavelength of the HNL fiber 51 is -0.60ps2/Km, a zero dispersion wavelength is 1.532 $\mu$m, a nonlinear coefficient at 1.55 $\mu$m wavelength is 20/W/km, and a fiber length is 1km.

It is shown by the numerical simulation that noiselike spectrum is directed toward the supercontinuum of flat spectrum. The intensity waveforms of not only noiselike pulse but also noise light have a minute configuration as small as an inverse number of the spectrum width, and can be regarded as a pseudo-assembly of short pulses. Thus if sufficient intensity can be obtained, generation of supercontinuum becomes possible as well as ultrashort pulses. Here, the noise light in burst state in which duration is limited is considered as the noiselike pulse model, and examination is made on changes of wavefrom and spectra which are propagated in the optical fiber.

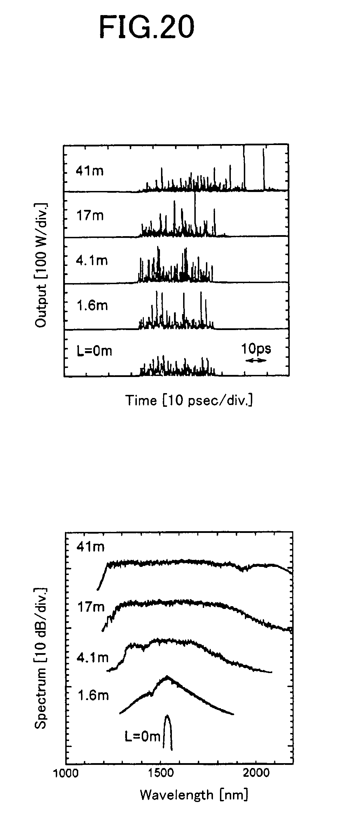

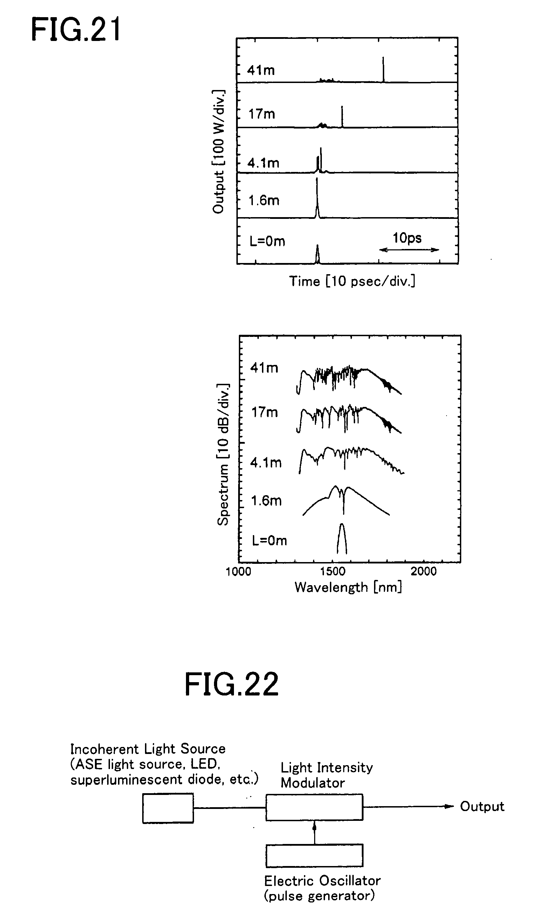

FIG. 20 shows a calculation example. In FIG. 20, an incident light is noiselike pulse of 20nm spectrum width, and duration of the intensity envelope curve is 33ps. This noiselike pulse light is regarded as an assembly of short pulses of about 100 to 300fs. Energy per pulse is 1.5nJ where a peak power becomes about 200 W. A highly nonlinear fiber having a dispersion value of $-0.74ps^2$/km at a wavelength of 1550nm is provided as a fiber for supercontinuum generation. For calculation, high-order dispersion up to 5 order and high order items including nonlinear delay response · self steeping effect and the like are considered. FIG. 21 shows the case that supercontinuum is generated with an ultrashort pulse having the same level peak power and spectrum width for comparison. This corresponds to supercontinuum generated from the fiber laser oscillated with an ordinary pulse mode. A pulse width is 300fs and a peak power is 200W.

First, the case of using noiselike pulses(FIG. 20) will be described. With about 1m propagation in the highly nonlinear fiber, spectrum is spread by self phase modulation · self Raman amplification so that minute peaks forming noiselike pulse are affected by pulse compression. Although the waveform is remarkably changed due to nonlinear light effect and dispersion with further propagation, noise light characteristics are retained despite the destroyed waveform and it functions as an assembly of ultrashort pulses. For this reason, the spectrum keeps spreading despite propagation of relatively long distance (several dozen m ~ several hundred m). And although the spectrum becomes in a noise state, the spectrum is substantially evenly distributed and a flat spectrum is obtained by taking an average of plurality of noise state pulses.

The case of using ordinary ultrashort pulses (FIG. 21) will be described. With about 1m propagation in the highly nonlinear fiber, spectrum is spread by self phase modulation self Raman amplification as well as the above case and is affected by pulse compression. However with about 4m propagation of the ordinary ultrashort pulse light, pulse time waveform is destroyed, peak power is reduced and spectrum spread is stopped. And a spectrum ripple is not more than 15dB. This is not a phenomenon particularly found in this calculation example, but these are general characteristics in supercontinuum generation using ultrashort pulses. Thus supercontinuum generation using noiselike pulses is superior to that using ultrashort pulses in spectrum dispersion efficiency (long nonlinear interaction length) and spectrum flatness, and it has overwhelming superiority as an ultrabroad light source.

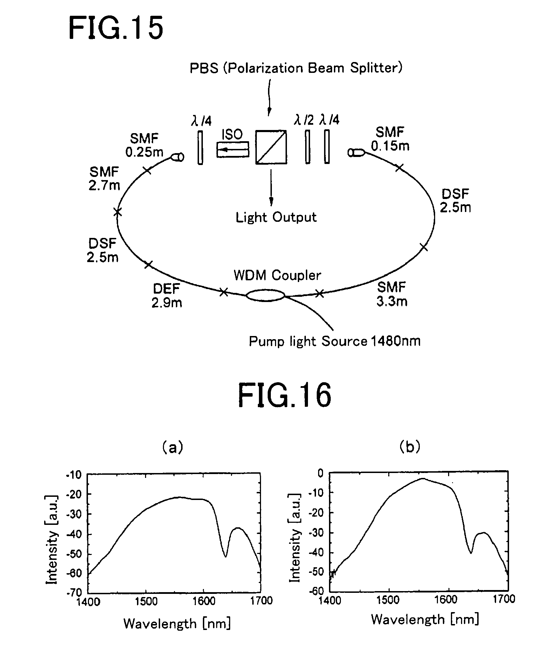

In the example shown in FIGs. 1 and 4, fiber types before collimator lens are designated but types of fiber are not so sensitively concerned. For example, the collimator lens shown in Fig. 15 is SMF, and when it is connected with dispersion shifted fiber of a dispersion value of around zero, oscillation occurs in the noiselike mode. A total dispersion amount of the normal dispersion fiber is $0.118ps^2$, a total dispersion amount of the anomalous dispersion fiber is $-0.140ps^2$, and a total dispersion amount is $-0.022ps^2$.

FIG. 16 shows the oscillation spectrum. When a pump light power is 500W, a full width at half maximum is 81nm, while with 1W, it is 74nm. When this resonator is added with 20m of SMF, it also oscillates in the noiselike mode. In this added condition, the total dispersion amount is about $-0.32ps^2$, the spectrum form is similar, and the full width at half maximum becomes a little narrow (about 70nm). In this condition that the absolute value of the total dispersion is large, it is very difficult to oscillate in the pulse mode, and the spectrum width becomes extremely narrow even though it oscillates. (Reference to IEEE Journal of Quantum Electronics, 30(6), 1469, 1994). However, noiselike mode oscillation is possible because the tolerance to dispersion is high. This is a great advantage of the present invention.

FIG. 5 (1) shows output spectrum of the fiber laser in the second embodiment. In the fiber laser of the second embodiment, SC light having 950nm band is obtained. It is imagined that the short pulse components are bundled because residual spectrum components are not left and the spectrum spreads evenly. And there does not exist minute ripples in the spectrum, which is characteristics of SC light generation from noiselike pulse.

(Third Embodiment)

A third embodiment related to the present invention will be explained. FIG. 6 is a block diagram showing a fiber laser of the third embodiment. The configuration of a resonator of the fiber laser and length of each fiber are same with the resonator in the first embodiment. A noiselike pulse extracted through the output port 81 of the first embodiment is entered into SMF33 and dispersion tolerance is examined.

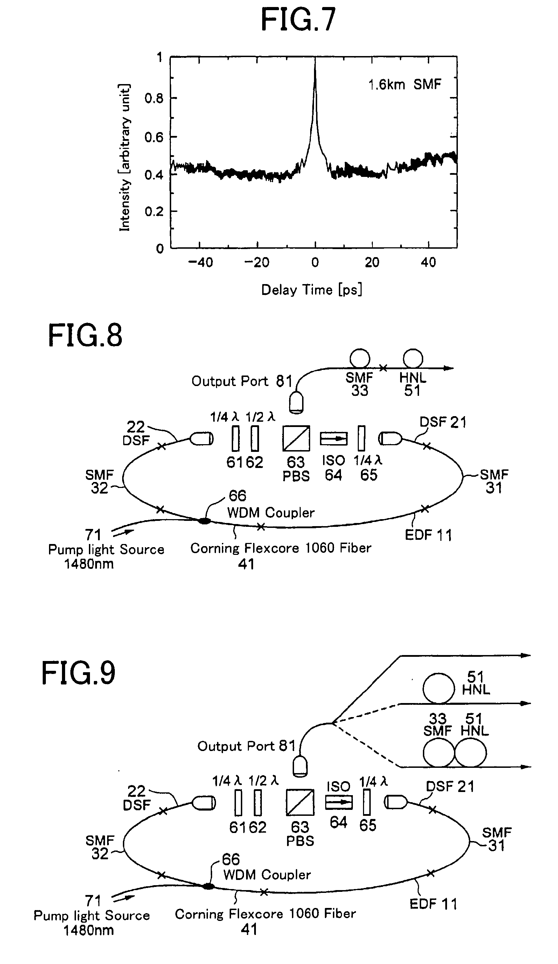

Here, a length of SMF33 is 1.6km and a dispersion amount is $-34ps^2$. FIG. 7 shows an autocorrelation trace after propagation of 1.6km SMF33. Short pulse components are not considered to remain after the 1.6km SMF propagation in a subpicosecond Fourier transform limit (TL) pulse. However, FIG. 7 shows that the short pulse component remains. It is clear that a soliton component is not propagated based on the fact that the same autocorrelation trace is obtained even if input power into SMF is changed.

(Fourth Embodiment)

A fourth embodiment related to the present invention will be explained. FIG. 8 is a block diagram showing a fiber laser of the fourth embodiment. The configuration of a resonator of the fiber laser and length of each fiber are the same as the resonator in the first embodiment. A noiselike pulse extracted through the output port 81 of the first embodiment is first entered into SMF33 and then entered into the highly nonlinear fiber 51, and thus supercontinuum (SC) generation is experimented.

FIG. 5 (2) shows output spectrum in the fiber laser of the fourth embodiment. In the fiber laser of the fourth embodiment, SC light having 700nm band is observed. Results of the third and fourth embodiments confirm that the noiselike pulse has dispersion tolerance that is not found in the TL pulse.

(Fifth Embodiment)

A fifth embodiment related to the present invention will be explained. FIG. 9 is a block diagram showing a fiber laser of the fifth embodiment. In the fiber laser of this configuration as in FIG. 9, sequentially arranged in a pulse traveling direction are a dispersion shifted fiber (DSF) 21, a single mode fiber(SMF) 31,an Er-doped optical fiber (EDF) 11, DSF 23, an optical multiplexer (WDM) coupler 66, an SMF 32, a DSF 22, a 1/4 γ polarization light plate 61, a 1/2 γ polarization light plate 62, a polarization beam splitter (PBS) 63, an isolator (ISO) 64, and a 1/4γ polarization light place 65, and a resonator is formed in a ring shape passing through these and returning again to the DSF 21. A pump light from the pump light source 71 is combined with the DSF 23 through the WDM coupler 66 and EDF 11 is pumped by a backward pumping configuration.

In the fifth embodiment, 1480nm band pump light is used as the pump light source 71. An output light is extracted through an output port 81 and entered into a optical spectrum analyzer or autocorrelater, and the waveform is observed. The EDF 11 having a large normal dispersion of $38.4ps^2/km$ with the EDF having a wavelength of 1.55 μm and a total dispersion is designed to be $-0.0027ps^2$ at 1.55 μm in the resonator of the fifth embodiment.

Here, respective lengths of optical fibers in the resonator of the fifth embodiment are DSF21: 2.0m, SMF31: 2. 4m, EDF11: 2.5m, DSF23: 3.0m, SMF32: 2.5m, DSF22: 2.0m and total fiber length is 14.0m. When the output spectrum in the fiber laser of this fifth embodiment, a flat and broad spectrum having a 3dB bandwidth of 87nm centering around a wavelength 1.55 μm is obtained as in the first embodiment.

The supercontinuum generation experiment is conducted by making the noiselike pulse extracted through the output port 81 enter the highly nonlinear (HNL) fiber 51. A dispersion value at 1.55 μm wavelength of the HNL fiber 51 is $-0. 60ps^2/Km$, a zero dispersion wavelength is 1.532 μm, a nonlinear coefficient at 1.55 μm wavelength is 20/W/km, and a fiber length is 1km. In the output spectrum of the fiber laser of this fifth embodiment, the SC light having 950nm band is obtained same as in the output spectrum of the second embodiment.

A total dispersion in the above-mentioned resonator of the fifth embodiment is set $-0.0027ps^2$ at a wavelength of 1.55 μm. And a total dispersion in the above mentioned resonator from the first to fourth embodiments is set $-0.029ps^2$ at a wavelength of 1.55μm. This total dispersion amount is preferably around zero and total dispersion is set slightly anomalous dispersion in this embodiment.

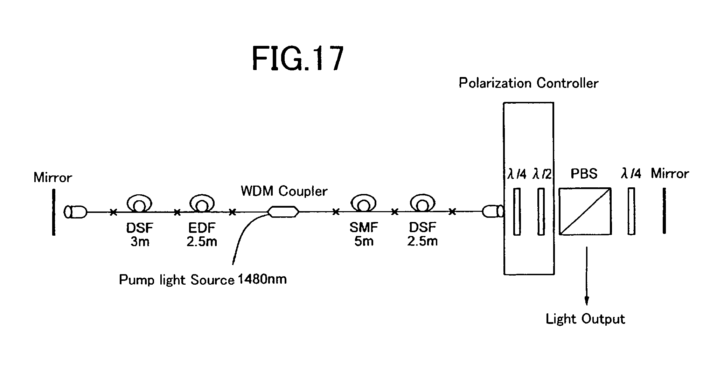

Although the resonator has a ring type configuration in the above mentioned embodiments, it may have a linear type configuration. FIG. 17 shows an example of the linear type configuration. The linear resonator comprises two mirrors, wherein rare earth-doped fibers as gain mediums and dispersion compensation fibers are provided between the mirrors to produce laser oscillation. And the laser oscillation can be produced by setting the dispersion value in the above mentioned procedures. The wavelength plate is used as a polarization controller in this embodiment. However, other polarization controller but the wavelength plate, e.g. a fiber loop and a Faraday rotator, may be used.

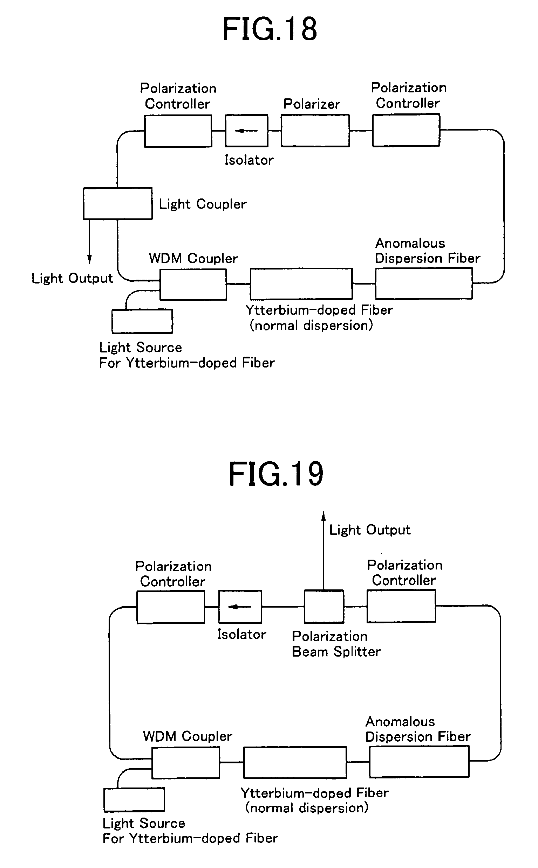

The present invention is not limited to the above mentioned embodiments. For example, although while Er-doped optical fiber is used as rare earth doped optical fibers, optical fiber doped with other rare earth elements, e.g. Yb, Nd, Pr, Tb, Sm, Ho etc. may be used. Preferred one may be appropriately selected. FIGs. 18 and 19 show an example of using Ytterbium-doped fiber, in which noiselike mode oscillation is generated with wavelength around 1 $\mu$m. Since the optical fiber using fused silica has large normal dispersion in the short wavelength region of not more than 1.2 $\mu$m, a specific optical fiber is required to compensate the dispersion value in the resonator.

In this example, a photonic crystal fiber (Reference: OSA Optics Letters, Vol.23, 1662, 1998) is used to realize anomalous dispersion in a short wavelength region of not more than 1.2 $\mu$m by utilizing waveguide dispersion of a photonic crystal structure. Here the resonator dispersion value is successfully fit to the above mentioned design index. Further as the rare earth-doped fiber, double clad fibers having double clad structure (Reference: IEEE Journal of Quantum Electronics, 33(7), 1049, 1997) to increase output may be used as well as ordinary single mode fibers doped with rare earth elements. Further this may be used in combination with high-output pump light sources to obtain output exceeding 1W.

Further as other optical fibers but rare earth-doped optical fiber forming the resonator in the above mentioned embodiments, SMF, DSF, Corning Flexcore 1060 are used. However, these types and lengths of the fibers are not limited to those of the embodiments. Preferred dispersion map of the resonator is appropriately determined according to the dispersion value and the absorption value of the rare earth-doped optical fibers and the dispersion value of other optical fibers but rare earth-doped optical fibers.

Although SMF is used as the anomalous dispersion fiber in this embodiment, the fiber is not limited to SMF. An anomalous dispersion fiber having dispersion absolute value lower than that of SMF is used to make the anomalous dispersion fiber longer to enhance the spectrum spread. As for an excitation method, a pump light having a wavelength of 1.48$\mu$m is in a backward pumping configuration. However the excitation wavelength and the excitation configuration are not limited to these. For example, a pump light having a wavelength of 0.98 $\mu$m, and forward pumping configuration in combination may be employed.

Further, although a polarization beam splitter is used as a mode-locking means in the above mentioned embodiment, it is not limited to this embodiment. As other preferred means, a saturable absorber comprising a semiconductor, a carbon nanotube, and the like is recited. And as the resonator configuration is not limited to the ring type resonator and preferred one is appropriately selected from resonators capable of laser oscillation example.

Further, although the highly nonlinear fiber is used as SC generation means using the output light from the fiber laser, the fiber is not limited to this example. For example, dispersion shifted fiber, dispersion flat fiber, photonic crystal fiber may be used.

Further, noiselike pulses are also generated from noise lights and the lights may be used to generate ultrabroad lights by supercontinuum. First, an ASE light source is used instead of fiber laser, and the noise lights is modulated to generate noiselike pulses. And supercontinuum generation may be performed from generated noiselike pulses. A principle configuration where ordinary noise lights (incoherent light) such as ASE (amplified spontaneous emission) light source are used as substitution will be shown in Fig. 22 hereinafter.

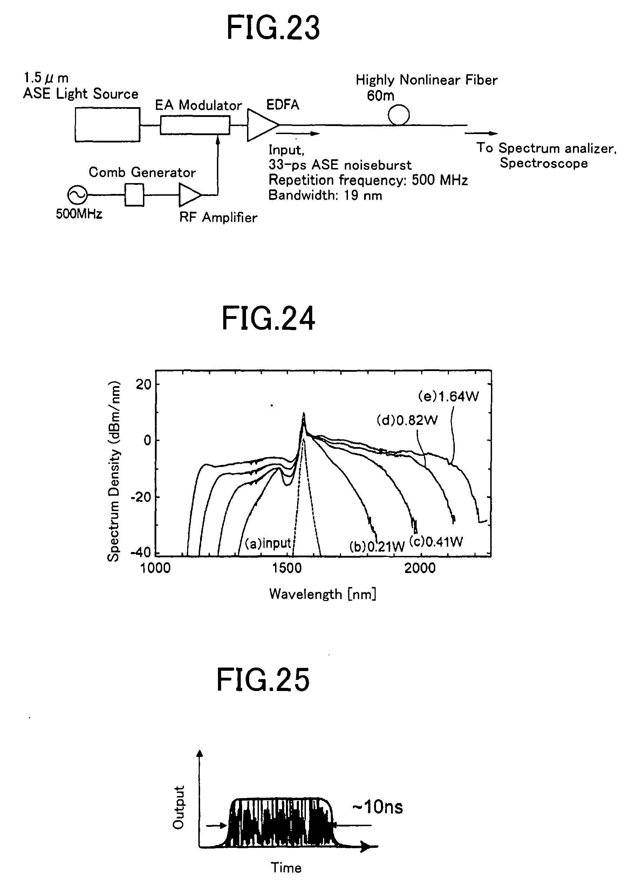

Here, the spectrum width is determined by the bandwidth of the incoherent light source. And supercontinuum generation is possible when output is amplified and entered into the highly nonlinear fiber. An example of the experiment is shown in FIG. 23. A noise light from the ASE light source with an erbium-doped optical fiber amplifier is modulated using an electro-absorption modulator (EA modulator) to generate a burst noise having a duration of 33ps. This is amplified using high output light amplifier and entered into a highly nonlinear fiber of 60m length to generate SC. The output spectrum at the side of short wavelength less than 1700nm is measured with an optical spectrum analyzer and one at the side of long wavelength is measured with a spectroscope.

Although ASE light source is used as a noise light in this embodiment, not only the ASE light source but also LED and SLD generating continuous noise lights may be used as a light source. As mentioned above, the noiselike pulse is a burst noise light in which duration is limited and a timewise envelop curve of intensity waveform is in the pulse state, so that a timewise intensity envelop curve is also obtained by modulating constant noise lights.

Although one with duration of about 10ps is described as an example of noiselike pulse so far, noiselike pulse related to the present invention is not limited to this. FIG. 25 shows the other example of noiselike pulses.

This pulse waveform is obtained in a mode-locked fiber laser where a total dispersion amount of the resonator is modulated so as to have a solution of noiselike pulse with the resonator of 900m and Er-doped fiber is used as amplification of the noiselike pulse. In this case, as shown in FIG. 25, a square-type noiselike pulse having an envelop curve relatively timewise constant intensive waveform at a long duration of about 10ns is obtained. Thus, the band can be broaden by supercontinuum by using noiselike pulse having long duration.

FIG. 24 shows output spectra when an input power into highly nonlinear fiber is changed. A spectrum density exceeds -10dBm/nm in a range from 1178nm to 2134nm when an input power is 1.6W, and obtained is intensity about 10 to 20dB higher comparing with conventional SC lights. There is not found ripples of spectrum that is found in the conventional SC generation. Further, a spectrum shape is relatively stable and a stability in the entire spectrum band is not more than 0.1dB/hour.

With the present invention, the fiber laser having flat and broad spectrum which is greatly exceeds the gain bandwidth of Er-doped fiber can be realized. Broad bandwidth light source can be provided by using this fiber laser.

**Claims**

1. A fiber laser comprising in a resonator:

   a normal dispersion optical fiber;
   an anomalous dispersion optical fiber;
   a rare earth-doped optical fiber as a gain medium; and
   a mode locking mechanism,

   wherein at least said rare earth-doped optical fiber is included as said normal dispersion optical fiber, and a length of said rare earth-doped optical fiber is set shorter than that of said anomalous dispersion optical fiber.

2. A fiber laser comprising in a resonator:

   a normal dispersion optical fiber;
   an anomalous dispersion optical fiber;
   a rare earth-doped optical fiber as a gain medium; and
   a mode locking mechanism,

   wherein at least said rare earth-doped optical fiber is included as said normal dispersion optical fiber, an absolute value of the normal dispersion per unit length at central wavelength of the output light spectrum in said rare earth-doped fiber is larger than that of the anomalous dispersion per unit length of said anomalous dispersion optical fiber.

3. A fiber laser comprising in a resonator:

   a normal dispersion optical fiber, an anomalous dispersion optical fiber, a rare earth-doped optical fiber as a gain medium; and
   a mode locking mechanism,

   wherein at least said rare earth-doped optical fiber is included as said normal dispersion optical fiber, a

nonlinear coefficient $(\gamma 2L2)/(\gamma 1L1)$ is larger than 1 where, in said rare earth-doped fiber, a nonlinear coefficient is $\gamma 1[1/W/m]$, a length is $L1[m]$, an effective nonlinear coefficient of other components of the resonator including the anomalous dispersion fiber is $\gamma 2[1/W/m]$, a length is $L2[m]$.

4. A fiber laser according to any one of claims 1, 2, 3, wherein a total dispersion of the central wavelength of the output light spectrum in said resonator is a value within a range of $-1ps^2$ to $+0.2ps^2$.

5. A fiber laser according to claim 4, wherein a core portion of said rare earth-doped optical fiber is added at least with an erbium(Er) ion.

6. A fiber laser according to claim 5, wherein a peak value of absorption coefficient in $1.53\mu m$ band of said Er-doped optical fiber is set within a range of 10dB/m to 35dB/m.

7. A fiber laser according to claim 6, wherein a dispersion value in $1.55\mu m$ band of said rare earth-doped optical fiber in said resonator is not less than $21ps^2/Km$.

8. A fiber laser according to claim 7, wherein a ratio of an absorption peak value to a dispersion value $\alpha/D$ $[dB/ps^2]$ is not less than 500, where a dispersion value in $1.55\mu m$ band of said rare earth-doped optical fiber is $D[ps^2/m]$ and an absorption peak value in $1.53\mu m$ band is $\alpha[dB/m]$.

9. A fiber laser according to claim 8, wherein said resonator comprises a pump light source for injecting a pump light into said resonator and an optical multiplexer for multiplexing the pump light from said pump light source, and said resonator further comprises a rare earth-doped optical fiber, a single mode optical fiber, a polarization beam splitter, an optical isolator, and a polarization plate.

10. A broadband light source using fiber laser described in claim 9, wherein at least highly nonlinear fiber is connected with an output side of the fiber laser to generate a supercontinuum (SC) light.

11. A broadband light pulse generating device comprising:

    a pulse light source generating a noiselike pulse in which an envelop curve of an intensive waveform is in a timewise pulse state; and
    a nonlinear medium exciting a nonlinear effect to said noiselike pulse,

    wherein said noiselike pulse generates the supercontinuum light in said nonlinear medium to generate a broadband pulse light.

**12.** A broadband light pulse generating device according to claim 11, wherein said pulse light source has a laser resonating structure comprising in the resonator a normal dispersion medium, an anomalous dispersion medium, a gain medium, and a mode-locking mechanism.

**13.** A broadband light pulse generating device according to claim 12, wherein said normal dispersion medium is made of an optical fiber having a normal dispersion, said anomalous dispersion medium is made of an optical fiber having anomalous dispersion, and said gain medium is made of a rare earth-doped optical fiber.

**14.** A broadband light pulse generating device according to claim 11, wherein said pulse light source comprises a noise light source generating noise light in which an intensive envelop curve is timewise constant, and a modulator modulating said noise light.

**15.** A broadband light pulse generating device according to claim 11, wherein said nonlinear medium is made of a DSF (dispersion shifted fiber), a dispersion flat fiber, and a photonic crystal fiber or a HNL (highly nonlinear fiber).

**16.** A noiselike pulse generating device generating a noiselike pulse in which an envelop curve of an intensive waveform is timewise pulse state by a duration-limited burst noise light, wherein the noiselike pulse generating device comprises a noise light source generating a noise light in which the intensive envelop curve is timewise constant and a modulator modulating said noise light, said modulator modulating said noise light to generate said noiselike pulse.

# FIG.1

Output Port 81

22
DSF

1/4 λ  1/2 λ

DSF 21

61 62

63
PBS

ISO
64

1/4 λ
65

SMF
32

SMF
31

66
WDM Coupler

71

Pump light Source
1480nm

Corning Flexcore 1060 Fiber
41

EDF 11

# FIG.2

# FIG.3

# FIG.4

Output Port 81

HNL 51

22 DSF

1/4 λ  1/2 λ

61 62

63 PBS

ISO 64

1/4 λ 65

DSF 21

SMF 32

SMF 31

66 WDM Coupler

71 →
Pump light Source 1480nm

Corning Flexcore 1060 Fiber 41

EDF 11

# FIG.5

Light Power [10dB/div] vs Wavelength [nm]

(2) 72mW 1.6km SMF

(1) 72mW

1000      1500      2000

# FIG.6

Output Port 81

SMF 33

22 DSF

1/4 λ  1/2 λ

61 62

63 PBS

ISO 64

1/4 λ 65

DSF 21

SMF 32

SMF 31

66 WDM Coupler

71 →
Pump light Source 1480nm

Corning Flexcore 1060 Fiber 41

EDF 11

13

# FIG.7

# FIG.8

# FIG.9

FIG.10

FIG.11

(a)

$\gamma' = 0.1$
$\gamma' = 1.0$
$\gamma' = 4.0$

(b)

$\gamma' = 0.1$
$\gamma' = 1.0$
$\gamma' = 4.0$

## FIG.12

## FIG.13

## FIG.14

# FIG.15

PBS (Polarization Beam Splitter)

Light Output

Pump light Source 1480nm

# FIG.16

(a)

(b)

# FIG.17

Mirror

WDM Coupler

Polarization Controller

$\lambda /4$  $\lambda /2$   PBS    $\lambda /4$  Mirror

DSF
3m

EDF
2.5m

SMF
5m

DSF
2.5m

Pump light Source 1480nm

Light Output

EP 1 729 379 A1

# FIG.18

# FIG.19

# FIG.20

# FIG.21

# FIG.22

# FIG.23

1.5 μm
ASE Light Source        EA Modulator        EDFA        Highly Nonlinear Fiber
60m

Comb Generator

500MHz        RF Amplifier

Input,
33-ps ASE noiseburst
Repetition frequency: 500 MHz
Bandwidth: 19 nm

To Spectrum analizer,
Spectroscope

# FIG.24

(e)1.64W
(d)0.82W
(a)input
(b)0.21W (c)0.41W

Spectrum Density (dBm/nm)
Wavelength [nm]

# FIG.25

~10ns

Output
Time

EP 1 729 379 A1

# INTERNATIONAL SEARCH REPORT

International application No.

PCT/JP2005/003785

| A. CLASSIFICATION OF SUBJECT MATTER |
|---|
| Int.Cl$^7$ H01S3/06, 3/098 |

According to International Patent Classification (IPC) or to both national classification and IPC

| B. FIELDS SEARCHED |
|---|
| Minimum documentation searched (classification system followed by classification symbols) |
| Int.Cl$^7$ H01S3/00-3/30 |

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | JP 4-357892 A (Nippon Telegraph And Telephone Corp.),<br>10 December, 1992 (10.12.92),<br>Full text; all drawings<br>(Family: none) | 1-9<br>10 |
| X<br>Y | KANG J.U., Broadband quasi-stationary pulses in mode-locked fiber ring laser, Optics Communications, 2000, Vol.182, No.4/6, pages 433 to 436 | 11-13,15<br>1-10,14,16 |
| X<br>Y | JP 9-211508 A (Hitachi Cable, Ltd.),<br>15 August, 1997 (15.08.97),<br>Fig. 6; Par. Nos. [0035] to [0036]<br>(Family: none) | 16<br>14 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June, 2005 (02.06.05) | 28 June, 2005 (28.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/003785

C (Continuation).   DOCUMENTS CONSIDERED TO BE RELEVANT

| Category* | Citation of document, with indication, where appropriate, of the relevant passages | Relevant to claim No. |
|---|---|---|
| A | Motoharu MATSUURA et al., "Raman Soliton Asshuku o Mochiita Supercontinuum-ko ni yoru Tahacho Pulse Seisei", The Institute of Electronics, Information and Communication Engineers Gijutsu Kenkyu Hokoku, 26 September, 2003 (26. 09.03), Vol.103, No.350, pages 5 to 8 | 1-16 |
| P,X | Kentaro YASUNAKA et al., "Er Doped Fiber Laser no Noise-like Mode Hasshin to Bunsan Taisei", 2004 Nen The Institute of Electronics, Information and Communication Engineers Sogo Taikai Koen Ronbunshu· Electronics 1, 08 March, 2003 (08.03.03), page 345 | 1-16 |

Form PCT/ISA/210 (continuation of second sheet) (January 2004)

# EP 1 729 379 A1

## INTERNATIONAL SEARCH REPORT

| | International application No. |
|---|---|
| | PCT/JP2005/003785 |

**Box No. II**   **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**   **Observations where unity of invention is lacking (Continuation of item 3 of first sheet)**

This International Searching Authority found multiple inventions in this international application, as follows:

    Whereas the inventions in claims 1-10 relate to a mode synchronizing fiber
    laser, the inventions in claims 11-16 relate to a noise-like pulse light source
    and a super continuum light generated thereby.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐   The additional search fees were accompanied by the applicant's protest.

                          ☐   No protest accompanied the payment of additional search fees.

Form PCT/ISA/210 (continuation of first sheet (2)) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. HOROWITZ et al.** Noiselike pulse with a broadband spectrum generated from an erbium-doped fiber laser. *Opt. Lett.,* 1977, vol. 22, 799-801
- **L.B.NELSON.** Efficient frequency doubling of a femtosecond fiber laser. *Opt. Lett.,* 1996, vol. 21, 1759-1761

- **BR.WASHBURN et al.** A phase locked frequency comb from anall-fibre supercontinuum source. *Proc. of European Conference on Optical Communication 2003 (ECOC2003,* 21 September 2003
- *IEEE Journal of Quantum Electronics,* 1994, vol. 30 (6), 1469
- *OSA Optics Letters,* 1998, vol. 23, 1662
- *IEEE Journal of Quantum Electronics,* 1997, vol. 33 (7), 1049